# EUROPEAN PATENT APPLICATION

(11) **EP 4 692 198 A1**
(43) Date of publication of application: **11.02.2026**
(21) Application number: 24192770.6
(22) Date of filing: 05.08.2024
(51) Int. Cl.: C08K 3/34, C08K 3/36, C08K 5/5399, C08L 83/10

(54) **FLAME RETARDANT THERMOPLASTIC COMPOSITION**

(71) Applicant: SABIC Global Technologies B.V., 4612 PX Bergen op Zoom (NL)
(72) Inventor: Boonman, Rob, 6160 GA Geleen (NL); Faber, Rein Mollerus, 6160 GA Geleen (NL); WEN, Liang, 6160 GA Geleen (NL)
(74) Representative: Sabic Intellectual Property Group

(57) **Abstract**

The present invention relates to a thermoplastic composition comprising, based on the weight of the composition,
(A) at least 85 wt.% of polycarbonate
(B) from 0.05 to 2.5 wt.% of flame retardant comprising phosphazene
(C) from 3 to 9 wt.% of talc
(D) from 1 to 5 wt.% of a polysiloxane compound
(E) optionally from 0.05 to 1 wt.% of an anti-drip agent
(F) optionally at most 5 wt.% of further components,
wherein the sum of the amounts of components (A) to (F) is 100 wt.%.

## Description

The present invention relates to a flame retardant thermoplastic composition comprising polycarbonate, preferably bisphenol A polycarbonate homopolymer.

Traditionally the flame retardancy properties of polycarbonate can be enhanced by the addition of flame retardant additives. One of the more common of such additives is the potassium salt of perfluoro-butane sulphonic acid, also known as Rimar salt. The use of Rimar salt as a flame retardant additive is more and more becoming the subject of environmental regulations and accordingly material suppliers either are forced to reduce the amount of Rimar salt or leave it out altogether. Accordingly, there is a need for an alternative solution which allows the provision of a flame retardant polycarbonate which is comparable with the polycarbonate materials based on Rimar salt, and combine the desired flame retardancy with sufficient mechanical properties and heat resistance.

The use of phosphazenes as a flame retardant for polycarbonate is also well-known, yet the use of phosphazenes has some disadvantages because typically higher loads of this flame retardant additive are required in order to meet the desired flame retardancy. Apart from the extra cost involved, the use of higher loadings of phosphazenes negatively affects at least some of the mechanical properties of the polycarbonate.

The present inventors have surprisingly found that a flame retardant polycarbonate material can be obtained using a specific combination of a low loading of phosphazene flame retardant, a polysiloxane and talc.

More specifically the invention relates to a thermoplastic composition comprising, based on the weight of the composition,
(A) at least 85 wt.% of polycarbonate
(B) from 0.05 to 2.5 wt.% of flame retardant comprising phosphazene
(C) from 3 to 9 wt.% of talc
(D) from 1 to 5 wt.% of a polysiloxane compound
(E) optionally from 0.05 to 1 wt.% of an anti-drip agent
(F) optionally at most 5 wt.% of further components,
wherein the sum of the amounts of components (A) to (F) is 100 wt.%.

In particular the present inventors found that thermoplastic compositions can be manufactured within the inventive design space that have a UL94 flame retardancy rating of V0 at 1.5mm, 1.2mm or 1.0mm, while maintaining acceptable heat resistance as expressed by means of Vicat softening temperature and acceptable impact properties.

### Polycarbonate

The thermoplastic composition according to the invention comprises polycarbonate in an amount of at least 85 wt.%, based on the weight of the thermoplastic composition. More preferred the amount of polycarbonate is at least 90 wt.%. The amount of polycarbonate may be from 85 to 95 wt.%, such as from 88 to 94 wt.% or 90 to 94 wt.%.

The polycarbonate is an aromatic polycarbonate and within the context of the present invention the terms polycarbonate and aromatic polycarbonate have the same technical meaning.

The polycarbonate is manufactured by reacting a bisphenol source with a carbonate source, as known to the skilled person per se. Accordingly the polycarbonate may be manufactured using the so called interfacial process wherein bisphenol is reacted with phosgene in a two- phase liquid reaction medium. Such polycarbonate is referred to as interfacial polycarbonate. Alternatively, the polycarbonate may be manufactured using the melt transesterification, also known as melt polycondensation process, more generally referred to as melt process, and wherein bisphenol is reacted with a diaryl or dialkyl carbonate. Typically, the carbonate source is a diarylcarbonate such as in particular diphenyl carbonate. Such polycarbonate is typically referred to as melt polycarbonate.

The skilled person knows that interfacial polycarbonate and melt polycarbonate, even if based on the same bisphenol, are distinct polymers. For example, it is well known that during the melt process a certain amount of branching occurs, typically referred to as Fries branching. Such branching is not or hardly present in interfacial polycarbonate. Further to that interfacial polycarbonate typically has a very low amount of terminal hydroxyl groups, such as for example at most 200ppm, preferably at most 10ppm, more preferably at most 5ppm, most preferably at most 1 ppm. To the contrary, and due to the nature of the melt process, melt polycarbonate contains a relatively high amount of terminal hydroxyl groups, such as for example at least 100 ppm, such as from 250 - 1000 ppm or 350 - 700ppm. In some applications the amount of terminal hydroxyl compound may be at most 1200 ppm, at most 1000ppm or at most 700 ppm, preferably at most 500ppm, wherein the amount of terminal hydroxy compound is determined by UV (ultraviolet) spectroscopy using a spectrophotometer to measure the UV absorption on 0.01 g of polycarbonate dissolved in 10ml of dichloromethane in a quartz cuvette having an optical path of 10mm.

The present invention is not limited in terms of the type of polycarbonate and may comprise or consist of melt polycarbonate, interfacial polycarbonate or a mixture of melt polycarbonate and interfacial polycarbonate.

The polycarbonate may also be a mixture of two or more different polycarbonates, wherein the polycarbonates differ in terms viscosity as typically expressed in terms of the melt volume rate.

It is preferred that the polycarbonate is bisphenol A polycarbonate homopolymer or a mixture of two or more different bisphenol A polycarbonate homopolymers. For the avoidance of doubt melt polycarbonate and interfacial polycarbonate, even if based on bisphenol A, are considered as being different polycarbonates.

The polycarbonate preferably has a melt volume rate, as determined in accordance with ISO 1133 (300°C, 1.2 kg) of from 3-35 cm³/ 10 min. More preferably the melt volume rate is from 6-25 such as from 10 - 20 or 12 - 18 cm³/ 10min.

In case the polycarbonate is a mixture then these preferred ranges for the melt volume rate apply for the mixture, meaning that the melt volume rates of the polycarbonates constituting the mixture may vary beyond the limits as indicated above. It is however preferred that, in case the polycarbonate is a mixture of at least two polycarbonates each of the at least two polycarbonates has a melt volume rate, as determined in accordance with ISO 1133 (300°C, 1.2 kg) of from 5 - 35 cm³/ 10 min, or preferably from 6-25 such as from 10 - 20 or 12 - 18 cm³/ 10min.

In the context of the present invention a polycarbonate-polysiloxane copolymer is not considered as a polycarbonate, but rather as a polysiloxane compound (D).

In the context of the present invention and for the avoidance of doubt, any polycarbonate (except for the polycarbonate-polysiloxane copolymer mentioned above) that is used as part of masterbatch for any other component in the thermoplastic composition is to be regarded as part of polycarbonate (A).

In some embodiments, the polycarbonate comprises post-consumer recycled (PCR) polycarbonate or post-industrial recycled (PIR) polycarbonate. The amount of PCR or PIR polycarbonate may be at least 1 wt.%, preferably at least 10 wt.%, more preferably at least 20 wt.% and preferably at most 90 wt.%, more preferably at most 75 wt.% or at most 50 wt.%.

### Flame retardant

The flame retardant of the invention comprises or consists of phosphazene. Thus, the flame retardant preferably comprises at least 50 wt.%, more preferably at least 75 wt.%, more preferably at least 90 wt.%, more preferably at least 95 wt.% and most preferably at least 99 wt.% of phosphazene based on the weight of the flame retardant. The flame retardant may consist of phosphazene.

The amount of flame retardant is from 0.05 to 2.5 wt.%, based on the weight of thermoplastic composition. Preferably the amount of flame retardant is from 1.0 to 2.3 wt.%, more preferably from 1.2 to 2.0 wt.%.

The present invention is not strictly limited to any particular kind of phosphazene compound. Phosphazene compounds are commercially available and known to the skilled person per se.

It is however an important aspect of the present invention that the amount of phosphazene flame retardant (also referred to as phosphazene) in the thermoplastic composition is relatively low. Thus, and in particular where the flame retardant consists of phosphazene, the amount of phosphazene is from 0.05 to 2.5 wt.%, based on the weight of thermoplastic composition. Preferably the amount of phosphazene is from 1.0 to 2.3 wt.%, more preferably from 1.2 to 2.0 wt.% based on the weight of the thermoplastic composition. A high amount of phosphazene will result in less preferred mechanical properties, while a low amount may not provide the desired flame retardancy.

The phosphazene may be a halogenated phosphazene compound, having the following structure 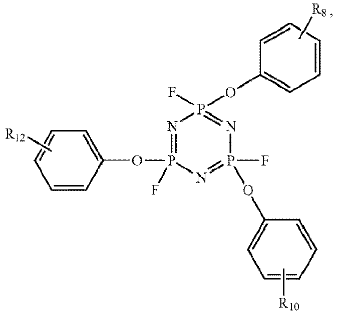 where R8, R10 and R12 can be the same of different and can independently be a hydrogen, a halogen, an aryl group, an aralkyl group, a C1-12 alkoxy, a C1-12 alkyl, a C1 to C12 haloalkyl or a combination thereof.

An exemplary phenoxyphosphazene is a halogenated phenoxyphosphazene such as trifluorophenoxyphosphazene having the structure:

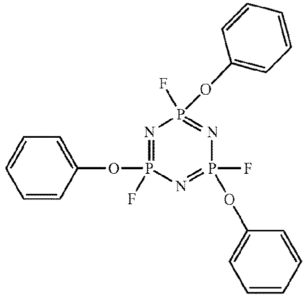

A useful commercially available trifluorophenoxyphosphazene is F - PhZ commercially available from Cenway Tech under the brand name is CWFR - TFTP.

The phosphazene may however be free of halogen atoms.

The phosphazene is preferably a cyclic phosphazene, more preferably selected from the group consisting of propoxyphosphazene, phenoxyphosphazene, methylphenoxyphosphazene, aminophosphazene and fluoroalkylphosphazenes. The phosphazenes preferably has the structure of formula I. 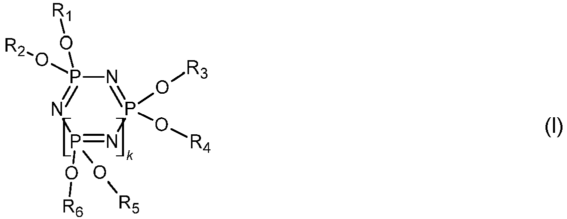 wherein R₁ to R₆ can be the same or different and can be
- an aryl group,
- an optionally substituted aralkyl group,
- a C1-12 alkyl group, preferably methyl, ethyl, propyl or butyl,
- C₅- to C₆-cycloalkyl which is in each case optionally substituted by alkyl, preferably C₁-to C₄-alkyl,
- a hydrogen
and k is an integer from 1 to 10, preferably from 1 to 8, more particular preferable from 1 to 5.

Preferably the cyclic phosphazene has a proportion of oligomers having k=1 (trimer) from 50 to 98 mol % preferably from 70 to 90 mol % and more preferably 70-85 mol %. More preferably, the phosphazene is phenoxyphosphazene (all radicals R₁ - R₆ are a phenyl group) having a proportion of oligomers having k=1 from 50 to 98 mol %.

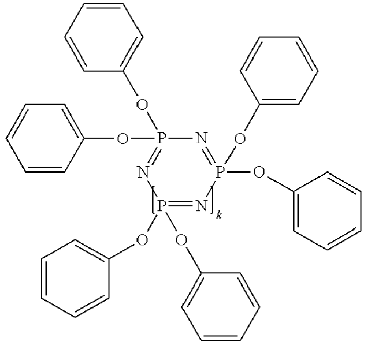

In a preferred aspect, the proportion of tetramers (k=2) is from 2 to 50 mol %, based on the amount of cyclic phosphazene, preferably from 5 to 40 mol %.

In another aspect, the proportion of the higher oligomeric phosphazenes (k=3 -10 or 3-8 or 3-5, depending on the selection for k) is from 0 to 30 mol %, preferably from 2 to 25 mol % based on the amount of cyclic phosphazene.

The proportion of oligomers having k ≥ 8 is from 0 to 2 mol %, based on the amount of cyclic phosphazene, preferably from 0.1 to 1 mol %.

Most preferably, the cyclic phosphazene substantially consists or consists of phenoxyphosphazene wherein k is at most 8 and having a proportion of trimer (k=1) of from 70 to 85 mol %, a proportion of tetramer (k=2) of from 10 to 20 mol %, a proportion of higher oligomeric phosphazenes (k=3-, 4, 5, 6 and 7) of from 5 to 15 mol %, wherein the total of cyclic phosphazenes wherein k is at most 8 is 100 mol%. In this respect the term "substantially consists" means that an amount of cyclic phosphazenes wherein k is more than 8 is at most 2 mol %.

R1 to R6 in formula I above may comprise one or more halogen atoms.

It is however preferred that the phosphazene does not contain any halogen substituents. In particular, the phosphazene and in particular the phosphazene of formula I above is preferably free of fluor substituents.

The flame retardant may comprise further flame retardants in addition to the phosphazene.

### Talc

The talc (C) in accordance with the present invention is not particularly limited and any talc common in the field of the invention may be used. The talc may be surface modified, i.e. coated, or may not be surface modified, i.e. uncoated. The amount of talc in the thermoplastic composition of the invention is 3 - 9 wt.%. It is preferred that the amount of talc is 4 - 7 wt.%. Surprisingly, the present inventors found that an amount of talc in this range, and in combination with the other components of the thermoplastic composition did not significantly reduce the impact resistance properties of the thermoplastic composition, contrary to what is typically observed when talc is added to a thermoplastic material.

### polysiloxane

The thermoplastic composition comprises from 1 to 5 wt.%, based on the weight of the thermoplastic composition of polysiloxane compound. The polysiloxane may be a single polysiloxane or a mixture, in which case the amount cited above is the combined amount of all polysiloxanes.

Polysiloxanes are known to the skilled person per se and typically contain siloxane (O-Si-O) repeating units in a backbone. The silicon atom is typically bonded with organic group such as C1-C10 branched or linear alkyl groups, aryl groups or arylalkyl groups. The silicon atom may also be bonded to a hydrogen group. Alternatively or in addition the silicon atom may contain alkoxy or phenoxy groups. If a polysiloxane contains at least one organic groups then the polysiloxane may also be referred to as a polyorganosiloxane.

A polysiloxane contains a plurality of Si-O-Si bonds which form a polymer chain, wherein the backbone of the polymer chain consists of -(Si-O)- repeating units.

A polysiloxane or polyorganosiloxane contains repeating (Si-O) units where at least one Si atom carries at least one organic group, i.e. group containing at least one carbon atom.

A polysiloxane comprises end groups and side groups. An end group is a chemical group attached to a Si atom located at one end of the polymer chain. A side group is a group attached to a Si atom, wherein the Si atom is not located at the end of the chain. A polyorganosiloxane, sometimes referred to as organopolysiloxane, typically contains a mixture of the following structures: 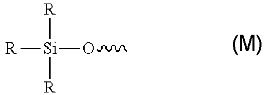 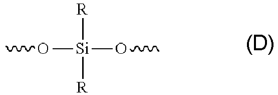 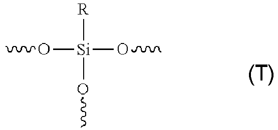 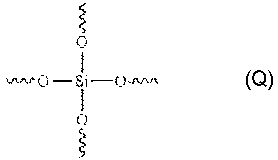 wherein M, D, T and Q represent the functionality of structural groups of organopolysiloxane. In particular, M represents a monofunctional group R₃SiO_{1/2}; D represents a difunctional group R₂SiO_{2/2} ; T represents a trifunctional group RSiO_{3/2}; and Q represents a tetrafunctional group SiO_{4/2}. Thus for example linear organopolysiloxanes have a backbone of D units and the end groups are M units while branched organopolysiloxanes have, depending on the amount of branching, a number of T and/or Q units.

The groups R in the structures above may be the same or different and are typically hydrogen, C1- C10 alkyl, C1-C10 alkoxy, aryl, aryl, aryalkyl, alkyaryl, either substituted or linear. Typically and preferably the groups R are selected from methyl, methoxy, phenyl, phenoxy and hydrogen. For example, the polysiloxane in accordance with the present invention may comprise D units wherein each R is a methyl group, or wherein the R groups are methyl and phenyl groups.

It is preferred that the polysiloxane comprises at least 85 mol% of D units and wherein R in the D units is the same or different and selected from methyl and phenyl.

It is preferred that the backbone of the polysiloxane comprises or consists of dimethyl-siloxane repeating units, methyl-phenyl siloxane repeating units, phenyl-phenyl-siloxane repeating units or combinations of these repeating units, which may be present in the polysiloxane in a random configuration. Preferably the polysiloxane comprises or consists of poly-dimethyl siloxane.

In the context of the present invention a (block) copolymer of polycarbonate and a polysiloxane is considered as a polysiloxane. However, for the purpose of the amount of such a copolymer only the polysiloxane block is to be considered. Thus, and by way of example, if a thermoplastic composition would contain 15 wt.% of a polycarbonate-polysiloxane copolymer and the amount of polysiloxane in the copolymer would be 12 wt.% (based on the weight of the copolymer), then actually the amount of polysiloxane in the thermoplastics composition would be 1.8 wt.%. The corresponding amount of polycarbonate would be comprised in the amount of component (A), i.e. polycarbonate.

For the avoidance of doubt and within the context of the present invention, any solid material like e.g. glass fibers or fillers such as talc and which contain a polysiloxane sizing or coating are not considered as polysiloxanes.

### Anti-drip

Anti-drip agents known in the art can be used for further enhancing the flame retardancy of the thermoplastic composition of the present invention. Typically, the anti-drip agent is poly-tetrafluoroethylene, or compositions comprising poly-tetrafluoroethylene, such as in particular poly-tetrafluoroethylene dispersed in, encapsulated by or otherwise comprised in a styrene-acrylonitrile copolymer, such materials being generally known as TSAN. The amount of anti-drip agent is from 0.05 to 1 wt.%, preferably from 0.1 to 0.8 wt.% with 0.2 - 0.6 wt.% being particularly preferred.

### Further components

The present may comprise further components including, but not strictly limited to anti - oxidants, thermal stabilizers, mold release agents, UV stabilizers, anti-static agents, pigments and/or dyes. Preferably the amount of further components (D) is at most 3, preferably at most 2, more preferably at most 1.5 or 1 wt.%. In an embodiment the thermoplastic composition comprises at least one type of further component (D).

Except for the anti-drip component and in the context of the invention it is preferred that the thermoplastic composition is free of perfluoroalkyl and polyfluoroalkyl substances (PFAS). In particular the composition preferably does not contain fluor-containing metal salt, such a for example Rimar salt, i.e. potassium perfluorobutane sulphonate.

### Properties

The thermoplastic composition preferably has or is selected to have a UL94 flame retardancy rating of V0 at 1 mm thickness, measure on injection molded test bars.

The thermoplastic composition preferably has or is selected to have a melt volume rate determined in accordance with ISO 1133 (300 °C, 1.2 kg) of at least 6.0 cc/10min, preferably at least 9 cc/ 10min. Preferably the melt volume rate is from 6 - 30 cc/ 10min, such as from 9 - 30 cc/ 10min, more preferably from 9 - 25 cc/ 10 min, such as from 12 - 20 cc/ 10 min or 15 - 20 cc/ 10 min.

The thermoplastic composition preferably has or is selected to have a Vicat softening point, as determined by ISO-306 B120 at a load of 50N and a speed of 120°C/hr of at least 138 °C, preferably at least 140°C, such as from 140 to 150 °C or 140 - 145 °C.

The thermoplastic composition preferably has or is selected to have a notched Izod impact strength determined in accordance with ISO 180/A, measured on an injection molded sample with a thickness of 3 mm, at a temperature of 23°C of at least 50 kJ/m², preferably at least 60 kJ/m². The notched Izod impact strength may be at most 70, 65 or 60 kJ/m²

### Applications

Thermoplastic compositions of the present invention may be used for the manufacture of articles, for example by means of an injection molding process. Typically, thermoplastic compositions of the invention are used for the manufacture of housings or parts of electric/ electronic devices such as in particular housing or parts of smart meters, electrical vehicle charging equipment, charging devices for consumer electronics like tablets, mobile phones, laptops and the like. The composition of the invention may also be used for the manufacture of electrical wall sockets and/or plugs.

The present invention will now be further elucidated based on the following non-limiting examples.

| Table 1 | | |
|---|---|---|
| PC 105 | Bisphenol A polycarbonate homopolymer manufactured using the interfacial process having a weight average molecular weight of 30,500 g/mol (GPC, polycarbonate standards) and having a MVR of 6 cm³/10 min (ISO 1133, 300°C @ 1.2 kg). | CAS# 25971-63-5 |
| PC175 | Bisphenol A polycarbonate homopolymer manufactured using the interfacial process having a weight average molecular weight of 21,800 g/mol (GPC, polycarbonate standards) and having a melt volume rate of 13 cc/10 min (ISO 1133, 300 °C @ 1.2 kg) | CAS# 25971-63-5 |
| KPFBS | Potassium perfluoro-butane-sulphonate (Rimar salt), commercially available as FR-2025 from 3M. | CAS# 29420-49-3 |
| PPZ | Phenoxyphosphazene (hexaphenoxycyclotriphosphazene) commercially available as Rabitle FP-110T from Fushimi. | CAS# 01-12-8 |
| PETS | Palmitic/Stearic Acid (50/50) ester of dipenta/pentaerythritol, commercially available from Faci. | CAS# 115-83-3 |
| AO_168 | Tris(2,4-di-t-butylphenyl)phosphite, commercially available from BASF as Irgafos 168 | CAS# 31570-04-4 |
| TSAN | Styrene-acrylonitrile encapsulated PTFE. Anti-drip agent. | CAS# 9010-94-0 / 9003-54-7 |
| PC-POS | Poly-dimethyl siloxane - polycarbonate copolymer, LEXAN ML7437-111N, commercially available from SABIC | CAS# 202483-49-6 |
| SFR100_MB | Masterbatch of 10 wt.% of SFR100 in PC175. SFR100 is a high viscosity silicone fluid containing a combination of a linear silicone fluid and a silicone resin that is soluble in the fluid. SFR100 is commercially available from Momentive. | |
| PDMS_MB | Masterbatch of 50 wt.% Poly-dimethyl siloxane (1000cst) in bisphenol A polycarbonate. | CAS# 63148-62-9 |
| MR02 | Acrylic silicone rubber, commercially available as Kanace MR02 from Kaneka | CAS# 01-34-0 |
| SR476 | Octaphenylcyclotetrasiloxane, commercially available as SR476 from Momentive | CAS# 546-56-5 |
| Talc_1 (fine) | Jetfine 3CA Talc, commercially available from Imerys (fine talc) | CAS# 14807-96-6 |
| Talc_2 (normal) | LHX-999 Talc, commercially available from Lian Hexin | CAS# 14807-96-6 |
| Talc_3 (coated) | Coated talc, Luzenac R7 commercially available from Imerys | CAS# 14807-96-6 |
| MgO | Magnesium Oxide | CAS# 1309-48-4 |
| Kaolin | Hydrated Aluminum Silicate, commercially available as HG90 from Kamin | CAS# 1332-58-7 |
| Mica | Mica 200HK, commercially available from Suzorite | CAS# 12001-26-2 |
| SAN | Styrene-acrylonitrile copolymer, having a a melt flow rate of 6.2 g/ 10min (ISO 1133, 190°C, 2.16 kg), a styrene content of about 25 wt>5 and an acrylonitrile content of about 75 wt.%, based on the weight of the copolymer, available from SABIC as CYCOLAC 29355-1000 | CAS# 9003-54-7 |
| TiO2 | Titanium dioxide | CAS# 13463-67-7 |
| H3PO3 | Phosphorous acid | |

| Table 2 | |
|---|---|
| Melt volume rate (MVR) | ISO 1133, 300°C, 1.2kg |
| Vicat softening temperature (VICAT) | ISO-306 B120 at a load of 50N and a speed of 120°C/hr |
| Notched Izod Impact (Nil) | ISO 180-1A, measured on injection molded test specimen having a thickness of 3.0mm at 23°C. The test result is the average of 5 specimens. |
| Flame retardancy | UL 94 V |
| | Measured in accordance with the UL-94 V test methods on injection molded test specimens of 127x 12.7 mm and at the thickness as specified. |
| | The term "NR" means Not Rated, i.e. that it does not pass any requirement laid down in the UL94 test method. |
| | Prior to the UL94 tests all samples were conditioned at room temperature for 48 hours. |

| Table 2a | | | | | | | | | | | | |
|---|---|---|---|---|---|---|---|---|---|---|---|---|
| | | **CE** 1 | **CE 2** | **CE 3** | **CE 4** | **CE 5** | **CE 6** | **CE 7** | **CE 8** | **CE 9** | **CE 10** | **CE 11** |
| PC105 | Wt. % | 75.0 | 75.0 | 75.0 | 75.0 | 75.0 | 75.0 | 38.2 | 37.7 | 37.2 | 36.7 | 37.7 |
| PC175 | Wt. % | 24.0 | 21.0 | 19.1 | 17.1 | 15.1 | 24.0 | 42.0 | 42.0 | 42.0 | 42.0 | 42.0 |
| KPFBS | Wt. % | 0.1 | | | | | 0.1 | | | | | |
| PPZ | Wt. % | | 3.0 | 5.0 | 7.0 | 9.0 | | 1.5 | 2.0 | 2.5 | 3.0 | 2.0 |
| PETS | Wt. % | 0.4 | 0.4 | 0.4 | 0.4 | 0.4 | 0.4 | 0.3 | 0.3 | 0.3 | 0.3 | 0.3 |
| AO_16 8 | Wt. % | 0.1 | 0.1 | 0.1 | 0.1 | 0.1 | 0.1 | 0.1 | 0.1 | 0.1 | 0.1 | 0.1 |
| TSAN | Wt. % | 0.5 | 0.5 | 0.5 | 0.5 | 0.5 | 0.5 | 0.5 | 0.5 | 0.5 | 0.5 | 0.5 |
| PC-POS | Wt. % | | | | | | | 17.5 | 17.5 | 17.5 | 17.5 | 17.5 |
| TOTAL | Wt. % | 100. 0 | 100. 0 | 100. 0 | 100. 0 | 100. 0 | 100. 0 | 100. 0 | 100. 0 | 100. 0 | 100. 0 | 100. 0 |

| Table 2b | | | | | | | | | | | | |
|---|---|---|---|---|---|---|---|---|---|---|---|---|
| | | **CE 1** | **CE 2** | **CE 3** | **CE 4** | **CE 5** | **CE 6** | **CE 7** | **CE 8** | **CE 9** | **CE 10** | **CE 11** |
| | | | | | | | | | | | | |
| MVR | cc/10 min | 8 | 9 | 10 | 13 | 17 | 8 | 9 | 9 | 10 | 10 | 9 |
| VICAT | °C | 143 | 136 | 131 | 126 | 126 | 144 | 139 | 138 | 136 | 135 | 137 |
| NII | kJ/m2 | 48 | 12 | 10 | 5 | 9 | 54 | 73 | 73 | 73 | 72 | 75 |
| UL94 @1.0mm | | V1 | NR | V1 | V0 | V0 | V1 | V1 | V1 | V1 | V0 | V1 |

The results in this Table 2b show inter alia that higher amounts of phosphazene flame retardant results in a desired flame retardancy rating of V0, yet at the expense of heat stability in terms in Vicat softening temperature. Replacement of part of the phosphazene with a polycarbonate-polysiloxane copolymer allows for some improvement of the heat stability, yet in view of the object of the present invention this improvement is not considered sufficient.

| **Table 3a** | | | | | | | | | | | |
|---|---|---|---|---|---|---|---|---|---|---|---|
| | | **E1** | **E2** | **CE 12** | **CE 13** | **CE 14** | **CE 15** | **CE 16** | **CE 17** | **CE 18** | **CE 19** |
| PC105 | Wt. % | 20.0 | 20.0 | 20.0 | 20.0 | 20.0 | 20.0 | 20.0 | 20.0 | 20.0 | 20.0 |
| PC175 | Wt. % | 70.6 | 700 | 71.5 | 71.2 | 70.9 | 70.3 | 76.7 | 76.4 | 76.1 | 75.5 |
| PPZ | Wt. % | 2.3 | 1.7 | 3.0 | 3.0 | 3.0 | 3.0 | 3.0 | 3.0 | 3.0 | 3.0 |
| Irgafos 168 | Wt. % | 0.1 | 0.1 | 0.1 | 0.1 | 0.1 | 0.1 | 0.1 | 0.1 | 0.1 | 0.1 |
| TSAN | Wt. % | 0.5 | 0.5 | 0.3 | 0.3 | 0.3 | 0.3 | 0.3 | 0.3 | 0.3 | 0.3 |
| 50% PDMS (1000cst) in PC | Wt. % | 1.5 | 2.7 | | 0.3 | 0.6 | 1.2 | | 0.3 | 0.6 | 1.2 |
| Fine talc | Wt. % | 50 | 5.0 | 5.0 | 5.0 | 50 | 50 | | | | |
| Phosphorou s acid | Wt. % | 0.1 | 0.1 | 0.1 | 0.1 | 0.1 | 0.1 | | | | |
| TOTAL | Wt. % | 100. 0 | 100. 0 | 100. 0 | 100. 0 | 100. 0 | 100. 0 | 100. 0 | 100. 0 | 100. 0 | 100. 0 |

| **Table 3b** | | | | | | | | | | | |
|---|---|---|---|---|---|---|---|---|---|---|---|
| | | **E1** | **E2** | **CE 12** | **CE 13** | **CE 14** | **CE 15** | **CE 16** | **CE 17** | **CE 18** | **CE 19** |
| MVR | cc/10 min | 13 | 13 | 18 | 18 | 18 | 17 | 24 | 23 | 22 | 24 |
| VICAT | °C | 138 | 140 | 137 | 137 | 138 | 136 | 138 | 136 | 136 | 136 |
| NII | kJ/m2 | 35 | 60 | 11 | 14 | 17 | 15 | 50 | 23 | 15 | 15 |
| UL94V @ 1.0mm | | V0 | V0 | V1 | V1 | V0 | V0 | V2 | n.t. | n.t. | n.t. |
| UL 94V @ 1.2mm | | n.t. | V0 | V0 | V0 | V0 | V0 | V2 | n.t. | n.t. | n.t. |
| UL 94V at 1.5mm | | V0 | V0 | V0 | V0 | V0 | V0 | V0 | NR | NR | NR |

The results in this Table 3b show inter alia that reasonable and good combination of heat resistance, impact properties and flame retardancy can be obtained if the amount of phosphazene is reduced, a polysiloxane component is added and talc is used in a relatively low amount. The effect of talc is surprising because typically the impact properties of thermoplastics are negatively affected by the inclusion of mineral fillers like talc.

| Table 4a | | | | | | | | | | | | | | | | | | |
|---|---|---|---|---|---|---|---|---|---|---|---|---|---|---|---|---|---|---|
| | | **CE 20** | **CE 21** | **CE 22** | **CE 23** | **CE 24** | **CE 25** | **CE 26** | **E3** | **CE 27** | **CE 28** | **CE 29** | **E4** | **E5** | **CE 30** | **CE 31** | **CE 32** | **E6** |
| PC105 | Wt.% | 27.0 | 27.0 | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| PC175 | Wt.% | 72.5 | 72.4 | 72.9 | 75.4 | 77.0 | 77.5 | 72.0 | 62.9 | 65.4 | 67.0 | 67.5 | 70.0 | 70.2 | 71.9 | 76.7 | 75.5 | 71.6 |
| KPFBS | Wt.% | | 0.1 | | | | | | | | | | | | | | | |
| PPZ | Wt.% | | | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| AO_168 | Wt.% | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| TSAN | Wt.% | 0.5 | 0.5 | 0.3 | 0.3 | 0.3 | 0.3 | 0.3 | 0.3 | 0.3 | 0.3 | 0.3 | 0.5 | 0.3 | 0.3 | 0.3 | 0.3 | 0.3 |
| PDMS_MB | Wt.% | | | | | | | | | | | | 2.7 | 2.7 | | | | |
| SFR100_MB | Wt.% | | | | | | | 5.0 | 100 | 100 | 100 | 100 | | | | | | |
| MR02 | Wt.% | | | | | | | | | | | | | | | 1.3 | 2.5 | 1.3 |
| SR476 | Wt.% | | | | | | | | | | | | | | 10 | | | |
| Talc_1 | Wt.% | | | 5.0 | 2.5 | 1.0 | 0.5 | 1.0 | 5.0 | 2.5 | 1.0 | 0.5 | 5.0 | 5.0 | 5.0 | | | 5.0 |
| H3PO3 | Wt.% | | | 0.1 | 0.1 | 0.0 | 0.0 | 0.0 | 0.1 | 0.1 | 0.0 | 0.0 | 0.1 | 0.1 | 0.1 | | | 0.1 |
| TOTAL | Wt.% | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |

| Table 4b | | | | | | | | | | | | | | | | | | |
|---|---|---|---|---|---|---|---|---|---|---|---|---|---|---|---|---|---|---|
| | | **CE 20** | **CE 21** | **CE 22** | **CE 23** | **CE 24** | **CE 25** | **CE 26** | **E3** | **CE 27** | **CE 28** | **CE 29** | **E4** | **E5** | **CE 30** | **CE 31** | **CE 32** | **E6** |
| MVR | | 15 | 15 | 16 | 17 | 19 | 19 | 17 | 14 | 15 | 19 | 10 | 17 | 14 | 17 | 18 | 15 | 17 |
| VICAT | | 144 | 145 | 140 | 140 | 140 | 141 | 140 | 140 | 140 | 139 | 140 | 140 | 141 | 140 | 142 | 142 | 142 |
| NII | | 68 | 64 | 13 | 13 | 14 | 14 | 17 | 57 | 26 | 19 | 41 | 56 | 52 | 13 | 59 | 58 | 50 |
| UL94V @ 1.0mm | | V2 | V0 | V1 | V1 | NR | V2 | NR | V0 | NR | NR | NR | V0 | V0 | V0 | NR | NR | V0 |
| UL 94V @1.2 mm | | V1 | V0 | V0 | V0 | V0 | V1 | V1 | V0 | V0 | V1 | NR | V0 | V0 | V0 | NR | NR | V0 |
| UL 94V @1.5mm | | V0 | V0 | V0 | V0 | V0 | V1 | NR | V0 | V1 | V1 | NR | V0 | n.t. | n.t. | NR | NR | V0 |

The results in this Table 4b show, inter alia, that a combination of a relatively low amount of phosphazene, a polysiloxane and talc as the flame retardant package for polycarbonate results in a materials having a UL94 V0 rating at 1mm combined with good impact properties (NII) and sufficient heat resistance (VICAT). The results further show the effect of talc (see CE31 and CE32) when used in conjunction with a polysiloxane. It is noted that E4 and E2 are identical in composition, yet these examples were prepared in different batches and on different dates, which explains that the properties of the E2 and E4 materials as reported herein are very close but not fully identical.

| Table 5a | | | | | | | | | | | | | | |
|---|---|---|---|---|---|---|---|---|---|---|---|---|---|---|
| | | **E7** | **E8** | **E9** | **CE33** | **CE34** | **CE35** | **CE36** | **CE37** | **CE38** | **CE39** | **CE40** | **CE41** | **CE42** |
| PC105 | Wt.% | 20.0 | 27.0 | 20.0 | 20.0 | 20.0 | 20.0 | 20.0 | 20.0 | 20.0 | 20.0 | 20.0 | 20.0 | 20.0 |
| PC175 | Wt.% | 70.2 | 63.2 | 70.2 | 74.3 | 70.3 | 74.3 | 70.3 | 74.3 | 70.3 | 74.3 | 72.3 | 74.3 | 70.3 |
| PPZ | Wt.% | 1.7 | 1.7 | 1.7 | 1.7 | 1.7 | 1.7 | 1.7 | 1.7 | 1.7 | 1.7 | 1.7 | 1.7 | 1.7 |
| AO_168AO | Wt.% | 0.1 | 0.1 | 0.1 | 0.1 | 0.1 | 0.1 | 0.1 | 0.1 | 0.1 | 0.1 | 0.1 | 0.1 | 0.1 |
| TSAN | Wt.% | 0.3 | 0.3 | 0.3 | 0.3 | 0.3 | 0.3 | 0.3 | 0.3 | 0.3 | 0.3 | 0.3 | 0.3 | 0.3 |
| PDMS_MB | Wt.% | 2.7 | 2.7 | 2.7 | 2.7 | 2.7 | 2.7 | 2.7 | 2.7 | 2.7 | 2.7 | 2.7 | 2.7 | 2.7 |
| Fine talc | Wt.% | 5 | | | | | | | | | | | | |
| Talc | Wt.% | | 5 | | | | | | | | | | | |
| Coated talc | Wt.% | | | 5 | | | | | | | | | | |
| Magnesium oxide | Wt.% | | | | 1 | 5 | | | | | | | | |
| Kaolin (clay) | Wt.% | | | | | | 1 | 5 | | | | | | |
| Mica | Wt.% | | | | | | | | 1 | 5 | | | | |
| SAN | Wt.% | | | | | | | | | | 1 | 3 | | |
| Titanium dioxide | Wt.% | | | | | | | | | | | | 1 | 5 |
| Phosphorous acid | Wt.% | 0.13 | 0.13 | 0.13 | | | | | | | | | | |
| TOTAL | Wt.% | 100.0 | 100.0 | 100.0 | 100.0 | 100.0 | 100.0 | 100.0 | 100.0 | 100.0 | 100.0 | 100.0 | 100.0 | 100.0 |

| Table 5b | | | | | | | | | | | | | | |
|---|---|---|---|---|---|---|---|---|---|---|---|---|---|---|
| | | **E7** | **E8** | **E9** | **CE33** | **CE34** | **CE35** | **CE36** | **CE37** | **CE38** | **CE39** | **CE40** | **CE41** | **CE42** |
| MVR | cc/10 min | 14 | 14 | 14 | 110 | n.t. | 20 | 24 | 19 | 24 | 18 | 23 | 21 | 18 |
| VICAT | °C | 141 | 142 | 141 | 136 | n.t. | 141 | 140 | 141 | 140 | 141 | 140 | 141 | 141 |
| NII | kJ/m2 | 52 | 31 | 52 | 6 | n.t. | 17 | 13 | 12 | 9 | 16 | 15 | 19 | 63 |
| UL 94V @ 1.0mm | | V0 | V1 | V0 | n.t. | n.t. | n.t. | V1 | n.t. | n.t. | n.t. | n.t. | n.t. | NR |
| UL 94V @ 1.2mm | | V0 | V0 | V0 | NR | n.t. | V1 | V0 | NR | V2 | NR | NR | V1 | V0 |

The results in this Table 5b show, inter alia, that different kinds of talc can be used in order to obtain the desired effect, whereas other mineral fillers do not work as they either result in poor flame performance or less preferred impact performance. Example E8 shows that while the composition of the example falls within the concept underlying the invention disclosed herein it performs slightly worse compared to other examples according to the invention. The melt volume rate of Example CE33 was relatively high which the inventor consider to find basis in the addition of magnesium oxide that promotes degradation of the polycarbonate. Example CE34 could not be compounded probably also as a result of severe degradation of the polycarbonate caused by the magnesium oxide. Accordingly, no properties could be measured for CE34.

## Claims

1. Thermoplastic composition comprising, based on the weight of the composition,
(A) at least 85 wt.% of polycarbonate
(B) from 0.05 to 2.5 wt.% of flame retardant comprising phosphazene
(C) from 3 to 9 wt.% of talc
(D) from 1 to 5 wt.% of a polysiloxane compound
(E) optionally from 0.05 to 1 wt.% of an anti-drip agent
(F) optionally at most 5 wt.% of further components, wherein the sum of the amounts of components (A) to (F) is 100 wt.%.

2. The composition of claim 1 wherein the amount of phosphazene flame retardant is from 1.0 to 2.0 wt. %, preferably from 1.2 to 1.8 wt.%.

3. The composition of any one or more of claims 1 - 3 wherein the phosphazene flame retardant has a structure represented by the formula (I), wherein R₁ to R₆ can be the same or different and can be an aryl group, an aralkyl group, a C1-12 alkoxy, a C1-12 alkyl, or a combination thereof and k is an integer from 1 to 10, preferably from 1 to 8.

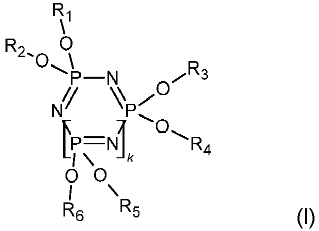

4. The composition of any one or more of claims 1-4 wherein the polycarbonate comprises or consists of bisphenol A polycarbonate homopolymer.

5. The composition of any one or more of claims 1-5 wherein the backbone of the polysiloxane comprises or consists of dimethyl-siloxane repeating units, methyl-phenyl-siloxane repeating units, phenyl-phenyl-siloxane repeating units or combinations thereof.

6. The composition of any one or more of claims 1-6, wherein the composition has or is selected to have a UL94 flame retardancy rating of V0 at 1 mm thickness.

7. The compositoin of any one or more of claims 1-7, wherein the composition has or is selected to have a melt volume rate determined in accordance with ISO 1133 (300 °C, 1.2 kg) of at least 6.0 cc/10min, preferably from 6 - 30 cc/ 10min, more preferably from 9 - 25 cc/ 10 min, more preferablay from 10 - 20 cc/ 10 min.

8. The composition of any one or more of claims 1-8. Wherein the composition has or is selected to have a Vicat softening point, as determined by ISO-306 B120 at a load of 50N and a speed of 120°C/hr of at least 138, preferably at least 140°C.

9. The composition of any one or more of claims 1-9 wherein the composition has or is selected to have, a notched Izod impact strength determined in accordance with ISO 180/A, measured on an injection molded sample with a thickness of 3 mm, at a temperature of 23°C of at least 50 kJ/m2, preferably at least 60 kJ/m2.

10. An article comprising or consisting of thermoplastic composition of any one or more of claims 1-10.

11. Article of claim 10, wherein the article is comprised in parts or the housing of electric or electronic devices, preferably charing equipment for electrical vehicles or smartmeters
